# EUROPEAN PATENT SPECIFICATION

(11) **EP 3 166 777 B1**
(45) Date of publication and mention of the grant of the patent: **23.09.2020**
(21) Application number: 15747543.5
(22) Date of filing: 26.06.2015
(51) Int. Cl.: B29D 30/20, B29D 30/00, B29D 30/30

(54) **APPARATUS AND PROCESS FOR BUILDING TYRES FOR VEHICLE WHEELS**
VORRICHTUNG UND VERFAHREN ZUR HERSTELLUNG VON REIFEN FÜR FAHRZEUGRÄDER
APPAREIL ET PROCÉDÉ POUR LA FABRICATION DE PNEUS POUR ROUES DE VÉHICULES

(30) Priority: 10.07.2014 IT MI20141255
(43) Date of publication of application: 17.05.2017
(73) Proprietor: Pirelli Tyre S.p.A., 20126 Milano (IT)
(72) Inventor: SACCHI, Sergio, I-20126 Milano (IT); PORTINARI, Gianni, I-20126 Milano (IT); BROHM, Lothar, 64747 Breuberg (DE)
(74) Representative: PGA S.p.A.
(86) International application number: PCT/IB2015/054814
(87) International publication number: WO 2016/005852

(56) References cited:
- WO-A1-2013/011396
- DE-A1- 2 243 752
- DE-A1-102011 001 559
- JP-A- 2006 062 251
- JP-A- 2010 115 879
- SU-A1- 666 743
- US-A- 3 802 982
- US-A1- 2007 175 567

## Description

The present invention relates to an apparatus and a process for building tyres for vehicle wheels.

A tyre for vehicle wheels generally comprises a carcass structure which comprises at least one carcass ply which has respectively mutually opposite end flaps which are engaged with respective annular anchoring structures, generally called "bead cores", integrated in the areas usually identified as "beads", which have an inner diameter which substantially corresponds to a so-called "fitting diameter" of the tyre on a respective mounting rim. The tyre further comprises a crown structure which comprises at least one belt strip situated in a radially outer position with respect to the carcass ply and a radially outer tread band with respect to the belt strip. Between the tread band and the belt strip (s) a so-called "underlayer" can be interposed, which is made of elastomeric material with properties adapted to ensure a stable bond of the belt strip (s) with the same tread band. Respective sidewalls made of elastomeric material are furthermore applied on the lateral surfaces of the carcass structure, each one extending from one of the lateral edges of the tread band up until the respective annular anchoring structure to the beads. In tyres of the "tubeless" type, the carcass ply is lined internally by a layer of elastomeric material, preferably butyl-based, which is usually called a "liner" and has optimal characteristics of impermeability to air, and which extends from one of the beads to the other.

It should be noted that, for the purposes of the present description and of the appended claims, the term "elastomeric material" is used to indicate a composition that comprises at least one elastomeric polymer and at least one reinforcement filler. Preferably, such composition further comprises additives such as, for example, a cross-linking agent and/or a plasticisation agent. Thanks to the presence of the cross-linking agent, such material can be cross-linked by heating, so as to form the final manufactured article.

In the present description and in the appended claims, a "component" of a tyre means any functional component of the tyre (for example, under-liner, liner, carcass ply or plies, fillers in the bead zone, belt layer(s), sidewall inserts in self-supporting tyres, anti-abrasive inserts, underlayer, tread band, textile or metallic reinforcements, reinforcement elements made of elastomeric material, etc.) or a portion thereof.

In the present description and in the appended claims, a "semi-finished product" means an elongated element, made of elastomeric material alone or comprising further structural elements, which is delivered on a forming drum in order to form a component of the tyre. The semi-finished product is preferably defined by a continuous elongated element in the shape of a strip. Preferably said semi-finished product is cut to size and has a flattened transverse cross-section. Said semi-finished product is made of elastomeric material, preferably embedding one or more textile or metallic reinforcement cords. Such textile or metallic reinforcement cords are arranged mutually parallel in the longitudinal direction of said elongated element or they are inclined with respect to said longitudinal direction. Said continuous elongated element is preferably delivered circumferentially on a forming drum, for example from a reel or from an extruder.

The WO 2013/011396 document, in the name of the same Applicant, discloses an apparatus for building tyres for vehicle wheels in which a forming drum is loaded on a shuttle which can move on a guide along a deposition line. The shuttle is moved on the guide in the two directions of travel in order to bring it to semi-finished product delivery stations which are arranged in at least some deposition stations arranged according to a spatial succession along the deposition line. At each one of the delivery stations, at least one semi-finished product is deposited on a radially outer surface with respect to the forming drum carried by the shuttle, in order to form at least one component of a tyre. The shuttle is moved on the guide according to a different sequence to the spatial succession of the deposition stations along the deposition line.

The US 3,841,941 document discloses an apparatus for feeding elements for building a tyre to a drum for the manufacture of tyre covering carcasses. The apparatus comprises a plurality of superimposed conveyors. An intermediate or service drum is brought into contact, according to a pre-established sequence, with the elements arranged on the conveyors and transfers them to the tyre building drum.

Document DE 10 2011 001 559 discloses a method for producing a vehicle tyre, wherein said method includes the following steps: positioning a carcass drum in front of a first delivery device for laying a first tyre component, winding the first tyre component in a first laying position onto the rotating carcass drum, moving the carcass drum in the vertical direction into at least one further laying position by means of a respective assigned delivery device for laying tyre components, wherein the delivery devices are each disposed above one another in a vertical direction. The carcass drum is moved by a movable drum lift in the vertical direction and at each laying position individual tyre components are successively wound above one another.

Document SU666743 discloses a line for the assembly of pneumatic tires comprising a closed conveyor carrying a plurality of assembly drums. The drums are carried by the conveyor close to a plurality of work stations for laying tyre elements on the drums. A first and a second chain conveyors are placed parallel to branches of the conveyor to supply the work stations.

Document US3802982 discloses a method for making a reinforced tire ply fabric wherein a ribbon emerging from an extruder head is wound onto a forming drum. A pair of forming drums are mounted on support beams respectively extending oppositely from a carrousel. After an annulus is completed on a first drum, the ribbon is severed, the carrousel rotated through 180 DEG. The aforesaid rotation of the carrousel would bring the first drum into contact with a cutting head mounted on traversing shaft in the same fashion as the second drum was previously in contact therewith when the ribbon was being wound onto the first drum.

The Applicant has observed that the apparatus described in US 3,841,941 has limitations, which are linked to the low flexibility of production and to the cycle times, which are long and incompatible with the production requirements of today. More precisely, such document discloses moving systems that feed different semi-finished products to a forming drum which remains fixed (apart from the rotation about its own main axis in order to allow the winding of the same semi-finished products). In fact, the delivery devices and the conveyors which bring the semi-finished products to the drum have to be able to move and/or vary their configuration in order to change the type of semi-finished product to be deposited on the drum. This entails an intrinsic limitation of the number and type of the semi-finished products handled and/or a considerable complexity of construction of said delivery devices and/or conveyors.

The Applicant has furthermore observed that the apparatus described and illustrated in the document WO 2013/011396 can be improved in several aspects in particular with reference to the space occupation thereof and with reference to the reduction of the building times which are critically influenced by the spatial extent of the apparatus itself. Such extent in fact necessarily implies movements of the forming drum adapted to receive the semi-finished products along paths that are not limited as such and with travel times that are non-negligible (which negatively influence the total cycle time).

In such context, the Applicant proposes to increase the flexibility of plants for the production of tyres while containing the space necessary for the placement of the production apparatuses and reducing the building times.

In particular, the Applicant has perceived the importance of reducing the floor space occupation of production apparatuses and of containing building times so as to be able to increase productive efficiency by taking advantage of limited spaces, in particular of existing industrial spaces without having to extend or change the production sites.

The Applicant also wishes to build tyres which are structurally different without modifying the plant but simply by modifying the design scheme and making it possible, in the same plant, to deposit semi-finished products in different radial and/or axial positions on the forming drums according to said design scheme in order to enable the production of mutually different batches of tyres and make new types of tyres.

The Applicant has thus perceived that, in order to achieve the set objectives, it is necessary to make use of the vertical dimension of the available space in order to arrange the semi-finished products destined to be wound on the forming drum and make said forming drum collect said semi-finished products by moving in three-dimensional space.

Lastly, the Applicant has found that, by organizing the conveyors (which are adapted to support and transport the semi-finished products) in groups which each comprise a plurality of said conveyors superimposed on each other, so that their final ends are arranged on multiple levels, and by adopting a Cartesian manipulation device with three axes in order to move the forming drum, it is possible to overcome the drawbacks explained above, obtaining compactness, productivity and flexibility of the respective building apparatus. In fact, the manipulation device is capable of easily, rapidly and precisely reaching all the ends of said conveyors from which to collect the semi-finished products in order to wind them on the forming drum.

More specifically, according to a first aspect, the present invention relates to a process for building tyres for vehicle wheels according to claim 1.

According to a further aspect, the present invention relates to an apparatus for building tyres for vehicle wheels. according to claim 10.

The Applicant believes that the apparatus and the process according to the invention make it possible to optimize the layout of the overall plant (in fact the floor space occupation of the conveyors can be drastically reduced) and the cycle times (the reduced distance between all the semi-finished products to be deposited makes it possible to contain the translation times of the forming drum) necessary for building parts of the tyre (for example the carcass structure) and/or the tyre overall.

The Applicant furthermore believe that the organization on multiple levels of the conveyors makes it possible to render the apparatus and the plant flexible since it is relatively simple to add one or more levels/conveyors while still maintaining the same floor space occupation of the apparatus.

Furthermore, the semi-finished products delivered are always resting on something during the entire step of delivery and of winding (either on the conveyors or on the radially outer surface with respect to the forming drum) and this ensures very high precision and repeatability of the positioning during the winding and therefore a high level of quality and uniformity of the tyres produced. Lastly, the Applicant believes that the apparatus and the process according to the present invention are particularly adapted for building tyres for motor vehicles which are produced in more limited series than vehicle tyres and thus it is necessary to change more often the type and/or number of the semi-finished products required for their production. The apparatus and the process according to the present invention are also particularly adapted to building the carcass structures of tyres.

The present invention, in at least one of the above mentioned aspects, can have one or more of the preferred characteristics which are described below. Preferably, the forming drum is approached to the conveyor surfaces downward from above.

Preferably said at least two delivery stations are arranged mutually side-by-side.

Preferably, each delivery station comprises at least two conveyors which are superimposed on each other.

Preferably, said conveyors are mutually parallel.

Preferably, said conveyors are conveyor belts which have an upper conveyor surface that can move along the feed direction, preferably with the possibility of being moved both in a direction of advancement, toward the manipulation device, and in an opposite direction, of retreat.

Preferably, each delivery station comprises a support frame for the respective conveyor surfaces, and said support frame is fixed (at least during the operating cycle of the apparatus).

Preferably, the final ends of the conveyors (apart from the advancement or retreat movement of the conveyor belt), are fixed at least during an operating cycle of the apparatus. The grip unit thus moves the forming drum in order to bring it to each end while said end remains situated in a predefined position.

Preferably, the final ends of the superimposed conveyors of a same delivery station are vertically offset.

Preferably, a lower final end projects towards the manipulation device of more than one upper final end which belongs to the same delivery station.

Preferably, the forming drum is approached to a lower final end which projects towards the manipulation device more than an upper final end does.

Preferably, the mutual position between final ends of two superimposed conveyors is such as to allow the forming drum to abut against the lower end without interfering with the upper end, for each type of drum adopted. This configuration makes it possible to move the forming drum between said two ends (up to bringing it above each one of them) with few movements and without risking that it or the manipulation device interfere with parts of the apparatus.

Preferably, the conveyor surfaces at the final ends are tilted downward from above, moving in the direction of advancement. In other words, the conveyor surface of each conveyor has a final section which is tilted toward the manipulation device. Such geometry facilitates the movement to approach the forming drum and the abutment thereof against the respective semi-finished product.

Preferably, each delivery station comprises a device for delivering at least one semi-finished product for each conveyor. In other words, each conveyor is fed with at least one semi-finished product originating from a respective delivery device. Preferably, said delivery device is an extruder.

Preferably, said delivery device is a reel support which is adapted to support said semi-finished product wound on a reel.

Preferably, at least one of the delivery devices is removably housed in the support frame.

Preferably, at least one of the delivery devices can be inserted into and extracted from, laterally with respect to the feed direction, said support frame.

Preferably, the delivery station comprises at least one trolley which supports a respective removable delivery device. Such characteristics enable an easier substitution of the semi-finished product used when it runs out and/or in order to change the type thereof in order to produce a different tyre.

Preferably, the delivery station comprises at least one cutting unit which is associated with a respective conveyor.

Preferably, each conveyor is associated with a respective cutting unit. The semi-finished product originating from the delivery device is cut to size by the cutting unit based on the circumference of the radially outer surface with respect to the forming drum and is then wound on said forming drum.

Preferably, the cutting unit is arranged upstream of the tilted final section of the respective conveyor.

Preferably, each conveyor is combined with an auxiliary conveyor which is placed beneath the respective conveyor surface and is configured to collect and move away any scrap material.

Preferably, the auxiliary conveyor is a conveyor belt.

In an embodiment, the auxiliary conveyor has one end thereof which projects beyond the final end of the respective conveyor.

In a different embodiment, the auxiliary conveyor is movable between a first position, wherein one end thereof projects beyond the final end of the respective conveyor, and a second position, wherein the end thereof is retracted below the final end of the respective conveyor.

Preferably, the auxiliary conveyor is parallel to the respective conveyor. Preferably, any scrap material is collected and moved away by an auxiliary conveyor which is arranged below the respective conveyor surface of each conveyor.

Preferably, collecting and moving away comprises moving the auxiliary conveyor in a transport direction opposite to the feed direction of the respective conveyor. When it is necessary to eliminate a part of semi-finished product present on a conveyor (which must not be deposited on the drum), the conveyor surface of the conveyor is made to advance while the drum is distal and the end of the auxiliary conveyor protrudes. The part to be rejected thus falls onto the auxiliary conveyor and is moved away.

Preferably, the auxiliary conveyor is moved in a transport direction opposite to the feed direction of the respective conveyor. The part to be rejected is brought under the conveyor from which it originates and is made to fall into an adapted container. Preferably, the grip unit can translate along a first horizontal axis, a second horizontal axis orthogonal to the first, and a vertical axis.

Preferably, the forming drum is moved by translating it along a first horizontal axis and/or a second horizontal axis orthogonal to the first horizontal axis and/or a vertical axis.

The second horizontal axis is oriented substantially parallel to a longitudinal extension of the conveyors.

The first horizontal axis extends from one delivery station to another beside it.

Preferably, in order to move the forming drum between one final end and another, the grip unit is translated at least along the vertical axis.

Preferably, in order to move the forming drum between one final end and another of the same delivery station, the grip unit is translated at least along the vertical axis and along the second horizontal axis.

Preferably, in order to move the forming drum between final ends of two side-by-side delivery stations, the grip unit is translated at least along the first horizontal axis and the second horizontal axis or at least along the first horizontal axis and the vertical axis.

Preferably, the forming drum is approached to and/or moved away from the upper conveyor surfaces along a direction perpendicular to said surfaces, by combining the translation along the vertical axis with the translation along the second horizontal axis. In this manner there is no slipping between the semi-finished product to be wound and the radially outer surface with respect to the forming drum, and between the wound semi-finished product and the final end from which it has been taken.

Preferably, the radially outer surface with respect to the forming drum is placed in contact with the semi-finished product which is abutted against the respective final end at zone of said final end that does not change with the variation of the diameter of the forming drum. The movement along the second horizontal axis makes it possible to always abut the radially outer surface against the forming drum at the same point of the conveyor independently of the size of the drum. Therefore it is not necessary to adjust the longitudinal positioning of the head of the semi-finished product as a function of the fitting.

Preferably, the manipulation device comprises movement devices which are raised with respect to said at least one-two delivery stations and which carry the grip unit.

Preferably, the grip unit is moved by the movement devices which are raised with respect to said at least two delivery stations.

Preferably, the grip unit is hung from said movement devices.

Preferably, the manipulation device delimits a manoeuvring space of the grip unit. Preferably, the manipulation device comprises a perimeter frame which supports the raised movement devices and delimits, below said movement devices, a manoeuvring space in which the grip unit is movable.

Preferably, the grip unit is moved in a manoeuvring space delimited by a perimeter frame which supports said movement devices.

Preferably, the final ends of said conveyors are at least partially housed in the manoeuvring space. The forming drum can thus be freely moved in the manoeuvring space in order to bring it to said final ends and/or at other devices present in or near said manoeuvring space.

Preferably, the movement devices comprise: at least one horizontal guide which extends along a first direction; a horizontal arm which extends along a second direction, wherein the horizontal arm is carried by said horizontal guide and is movable along the first direction; a vertical arm which extends along a third direction, wherein the vertical arm is carried by the horizontal arm, is movable along the second direction, and has a lower end bearing the grip unit, wherein the grip unit is movable along the third direction.

Preferably the vertical arm is integral with the horizontal arm in its movement along the second direction.

Preferably, the movement devices comprise a trolley which is mounted between the horizontal arm and the vertical arm and which can move on the horizontal arm along the second direction.

Preferably, the vertical arm can move on the trolley along the third direction. Preferably, the movement devices comprise two parallel horizontal guides and the horizontal arm extends between said two horizontal guides.

Preferably, the perimeter frame comprises a plurality of vertical posts which support the horizontal guide(s), wherein the manoeuvring space is delimited between said vertical posts.

Preferably, the perimeter frame comprises four vertical posts arranged at the corners of the manoeuvring space.

Preferably, the delivery stations are arranged on a single side of the manoeuvring space.

Preferably, the delivery stations are arranged on multiple sides of the manoeuvring space.

Preferably, the delivery stations are arranged on opposite sides of the manoeuvring space. The delivery stations are situated beside or around the manipulation device with their final ends situated in said manoeuvring space so as to be reached by the grip unit.

Preferably, the apparatus comprises equipment for mounting annular anchoring structures, wherein said equipment is arranged at least partially in said manoeuvring space. Preferably, said equipment is arranged at an opposite side of the manoeuvring space to the delivery station(s).

Preferably, the grip unit in the manoeuvring space is moved in order to bring the forming drum to the equipment for locating annular anchoring structures.

After having wound the semi-finished products on the forming drum at the conveyors, said drum, still supported by the grip unit, is brought up to said equipment and released there for the locating of annular anchoring structures and the turning-up of the end flaps around said annular anchoring structures.

Further characteristics and advantages will become better evident from the detailed description that follows of a preferred, but not exclusive, embodiment of an apparatus and of a process according to the present invention.

Such description will be given below with reference to the accompanying drawings, which are provided for indicative and, therefore, non-limiting purposes only and in which:
- Figure 1 is a schematic plan view of an apparatus for building tyres for vehicle wheels according to the present invention;

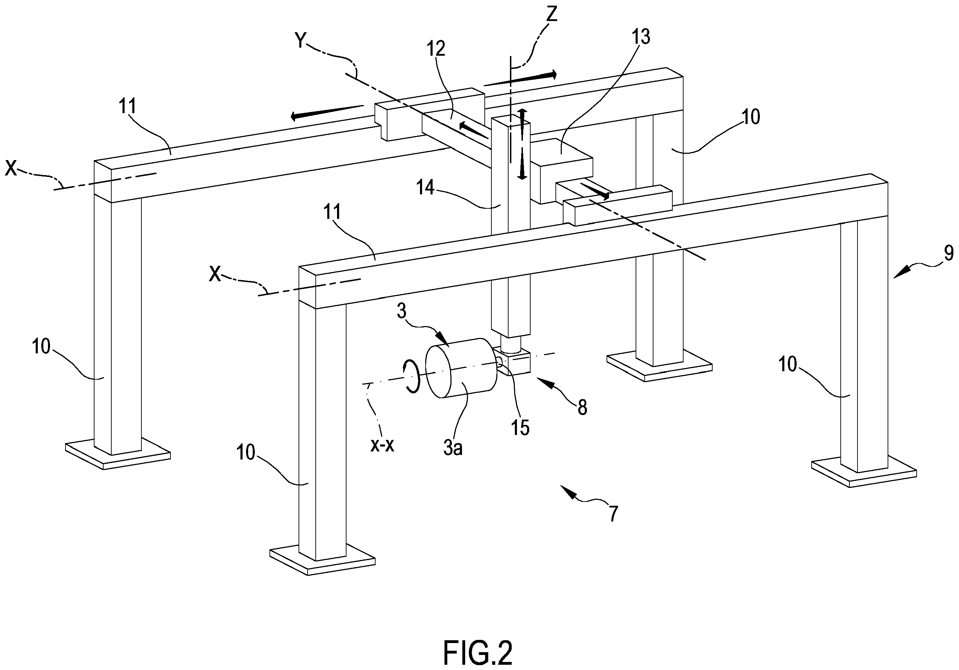

- Figure 2 is a perspective view of an element of the apparatus in Figure 1;
- Figure 3 is a side view of a portion of the apparatus in Figure 1 including the element in Figure 2;
- Figure 4 is a front elevation view of the portion in Figure 3;
- Figure 5 is a radial semi-cross-sectional view of a tyre for motor vehicles which was built with the apparatus in Figure 1;
- Figure 6 is a radial cross-sectional view of a tyre for motor vehicles which was built with the apparatus in Figure 1.

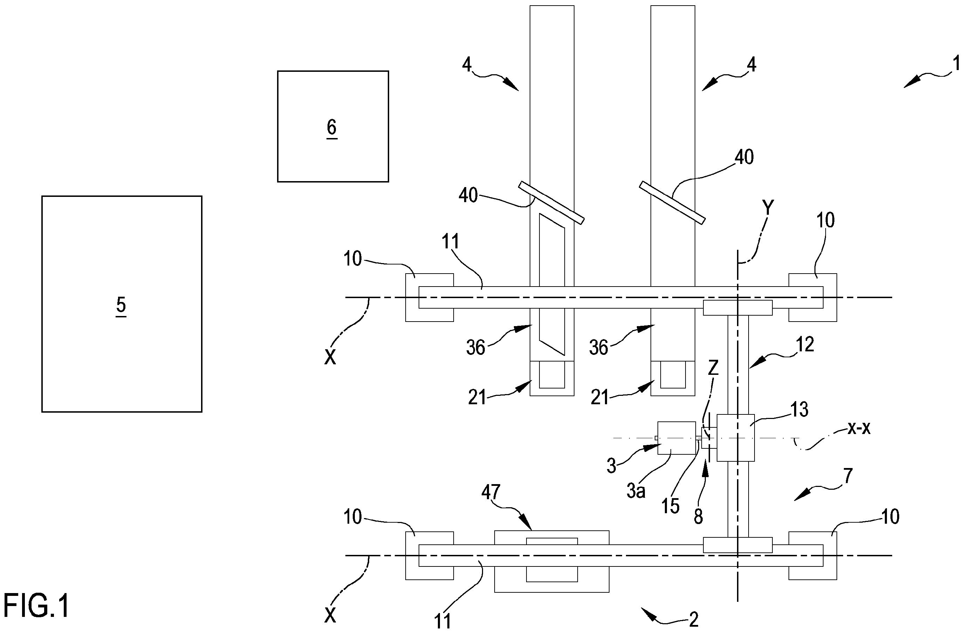

With reference to Figure 1, the reference numeral 1 generally designates an apparatus for making tyres 100 for vehicle wheels according to the present invention.

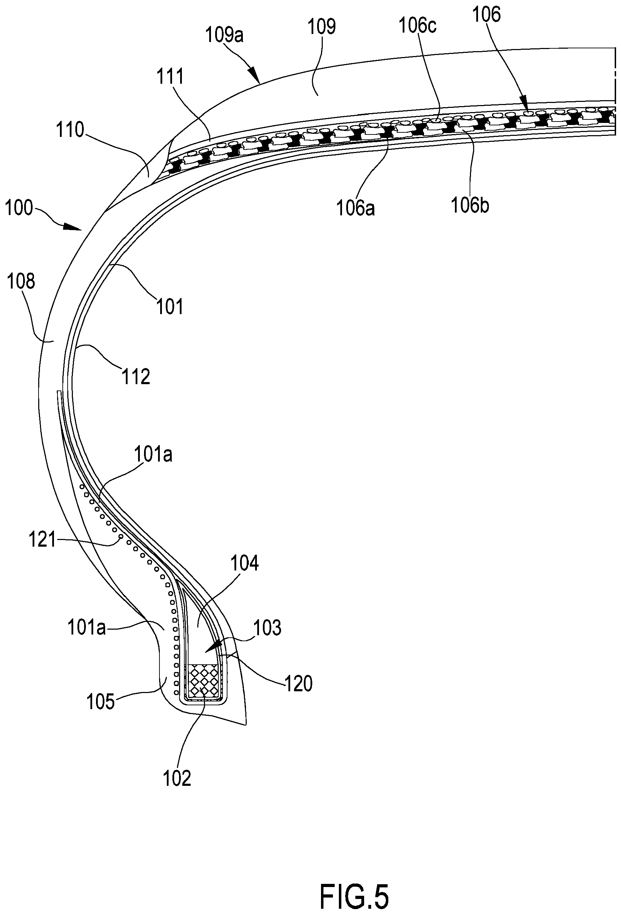

A tyre 100 for motor vehicles, which was made on said apparatus 1 and according to the process according to the present invention, is illustrated in Figure 5 and comprises at least one carcass structure, which comprises at least one carcass ply 101 which has respectively mutually opposite end flaps which are engaged with respective annular anchoring structures 102, known as bead cores, which can be associated with a filler insert 104. The zone of the tyre which comprises the annular anchoring structure 102 and the filler insert 104 forms a bead structure 103, which is intended to anchor the tyre on a corresponding mounting rim, not shown. Each bead structure is associated with the carcass ply or plies by folding back the mutually opposite lateral edges of the at least one carcass ply 101 around the annular anchoring structure 102 so as to form the so-called turnups 101a of the carcass ply. An anti-abrasive element 105 made with elastomeric material can be arranged in an outer position of each bead structure 103. The carcass structure is associated with a breaker 106 which comprises one or more belt layers 106a, 106b which are arranged radially superimposed one over the other and with respect to the carcass structure, and have textile or metallic reinforcement cords. Such reinforcement cords can have a crossed orientation with respect to a circumferential direction of extension of the tyre 100. A "circumferential" direction is a direction that is generically directed in the direction of rotation of the tyre. In a position that is radially more external with respect to the belt layers 106a, 106b, at least one zero degree reinforcement layer 106c can be applied, commonly known as a "0° belt", which generally incorporates a plurality of reinforcement cords, typically textile or metallic cords, which are oriented in a substantially circumferential direction, thus forming an angle of a few degrees (for example an angle of between about 0° and about 6°) with respect to the axial middle line of the tyre, and coated with an elastomeric material. In a position that is radially external with respect to the breaker 106, a tread band 109 is applied which is made of elastomeric material, like other semi-finished products that make up the tyre 100. Respective sidewalls 108 made of elastomeric material are furthermore applied, in an axially external position, on the lateral surfaces of the carcass structure, each one extending from one of the lateral edges of the tread 109 up until the respective bead structure 103. In a radially external position, the tread band 109 has a rolling surface 109a which is intended to come into contact with the ground. Circumferential grooves, which are connected by transverse notches so as to define a plurality of blocks of various shapes and sizes distributed on the rolling surface 109a, are generally provided in this surface 109a, which for the sake of simplicity in Figure 5 is shown smooth. An underlayer 111 can optionally be arranged between the breaker 106 and the tread band 109. An element constituted by elastomeric material 110, commonly known as a "mini-sidewall", can optionally be present in the zone for connection between the sidewalls 108 and the tread band 109, this mini-sidewall generally being obtained by coextrusion with the tread band 109 and enabling an improvement of the mechanical interaction between the tread band 109 and the sidewalls 108. Preferably the end portion of the sidewall 108 directly covers the lateral edge of the tread band 109. For tyres without an air chamber, a layer of elastomeric material 112, generally butyl-based and generally known as a "liner", provides the necessary impermeability to the air that inflates the tyre, and is provided in a radially internal position with respect to the at least one carcass ply 101. The rigidity of the sidewall 108 can be improved by providing the bead structure 103 with an additional reinforcement element 120, a ribbon-like insert generally known as a "flipper". The "flipper" 120 is a reinforcement element which is wound around the respective annular anchoring structure 102 and around the filler insert 104 so as to surround them at least partially, said reinforcement element being arranged between the at least one carcass ply 101 and the bead structure 103. Usually, the "flipper" is in contact with said at least one carcass ply 101 and said bead structure 103. The "flipper" 120 typically comprises a plurality of metallic or textile cords (for example made of aramid or rayon) embedded in a cross-linked elastomeric material. The bead structure 103 can comprise a further protective element which is generally known as a "chafer" or protective strip and the function of which is to increase the rigidity and integrity of the bead structure 103. The "chafer" 121 usually comprises a plurality of cords embedded in a cross-linked elastomeric material. The cords are generally made of textile materials (for example aramid or rayon) or of metallic materials (for example steel cords).

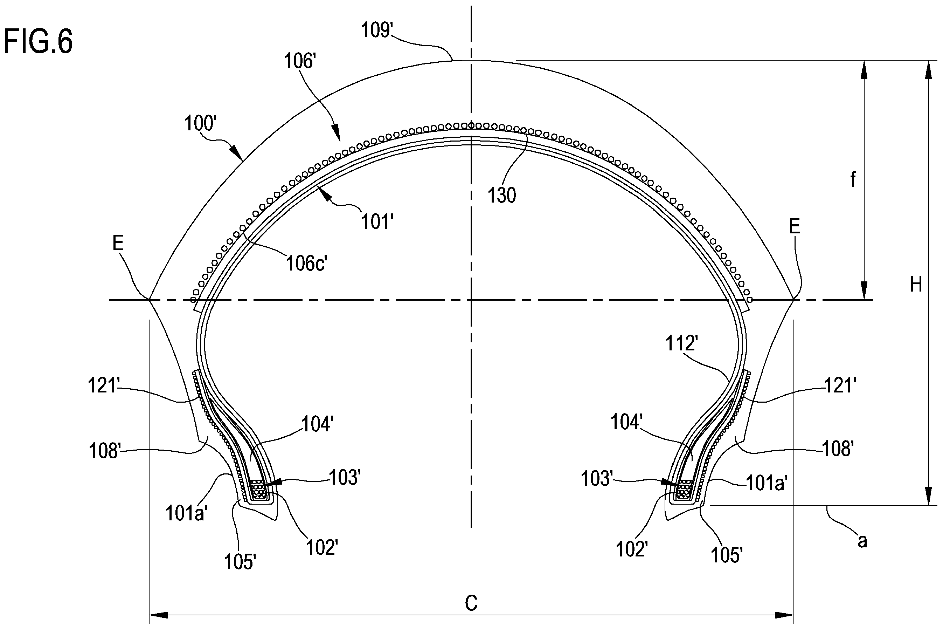

A tyre 100' for motor vehicles, made on said apparatus 1 and according to the process according to the present invention, is illustrated in Figure 6. Elements of such tyre for motor vehicles 100' which correspond to elements described above for the tyre in Figure 5 are indicated with the same reference numerals and an apostrophe. The breaker 106' of such tyre for motor vehicles 100' is constituted by a layer 106c' which has a plurality of circumferential windings which are arranged axially side by side and are formed by a rubberized cord. The tyre 100' illustrated comprises a layer made of elastomeric material 130' which is arranged between its carcass structure and said breaker 106'. A straight cross-section of the tyre 100' for motor vehicles is distinguished by a high transverse curvature. In particular, the tyre 100' for motor vehicles has a cross-section height "H" which is measured, on the axial middle line, between the summit of the tread band 109' and the fitting diameter, and is designated by the reference line "a" which passes through the bead structures 103' of the tyre 100'. The tyre 100' for motor vehicles furthermore has a width "C" which is defined by the distance between the laterally opposing ends "E" of the tread band 109', and a curvature which is defined by the particular value of the ratio between the distance "f" of the summit of the tread band 109' from the line that passes through the ends "E" of the tread band 109', measured on the axial middle line of the tyre 100', and the aforementioned width "C". Tyres with a high curvature are tyres that have a ratio of curvature f/C not lower than 0.2, and preferably f/C ≥ 0.25, for example 0.28. Preferably such ratio of curvature f/C does not exceed 0.8, and preferably f/C ≤0.5. Preferably, the tyres for motor vehicles have particularly low sidewalls. In other words, tyres with low or low-section sidewalls are tyres in which the height to sidewall ratio (H-f)/H is lower than 0.7 and more preferably is lower than 0.65, for example 0.6. Preferably, the ratio of transverse curvature/cord (f/C) can be substantially comprised between 0.35 and 0.70, and even more preferably between 0.35 and 0.60. Preferably, the ratio (total height)/cord (H/C) is substantially comprised between 0.6 and 1.

The above mentioned components of the tyres 100, 100' described above are made on one or more forming drums by moving said drums between different delivery stations of semi-finished products, at each one of which adapted devices apply the above mentioned semi-finished products on the forming drum or drums.

The apparatus 1, which is generally schematically illustrated in the accompanying Figure 1, comprises a line for building carcass structures 2, at which forming drums 3 are moved between different delivery stations 4 of semi-finished products which are adapted to form for example on each forming drum 3 a carcass sleeve which comprises, for example, the carcass ply or plies 101, 101', the liner 112, 112', the annular anchoring structures 102, 102', the "flippers" 120, the "chafers" 121, 121' and optionally at least one part of the sidewalls 108, 108'.

At the same time, in a line for building external sleeves 5, one or more auxiliary drums, not shown, are moved between different work stations, not shown, which are adapted to form, on each auxiliary drum, an external sleeve, which comprises at least the breaker 106, 106', the tread band 109, 109', the anti-abrasive elements 105 and optionally at least one part of the sidewalls 108, 108'.

The apparatus 1 further comprises an assembly station 6 at which the external sleeve is coupled to the carcass sleeve, so as to define the built green tyre 100, 100'.

The built green tyres 100, 100' are finally transferred to at least one unit for moulding and vulcanization, not shown.

The line for building carcass structures 2 comprises a manipulation device 7 having at least one grip unit 8 which is configured to support and transport at least one forming drum 3 at a time and to make it rotate about a longitudinal symmetry axis "x-x" thereof.

The manipulation device 7 comprises a perimeter frame 9 which is formed by four vertical posts 10 which are arranged at the corners of a substantially rectangular (in plan view as in Figure 1) manoeuvring zone. Each post 10 has a base resting on the ground and an upper end which supports a horizontal beam which defines a horizontal guide 11. In particular, in the embodiment shown, the manipulation device 7 comprises two mutually parallel horizontal guides 11, each one supported by two posts 10. The horizontal guides 11 extend along a first direction "X".

The two horizontal guides 11 bear a horizontal arm 12 which extends between said two horizontal guides 11 along a second direction "Y" which is perpendicular to the first direction "X". The horizontal arm 12 is mounted on the horizontal guides 11 by way of mechanisms that are known per se and therefore not described in detail, which enable the translation thereof, actuated by one or more motors, not shown, on the guides 11 and along the first direction "X".

A trolley 13 is mounted on the horizontal arm 12 by way of mechanisms that are known per se and therefore not described in detail, which enable the translation thereof, actuated by one or more motors, not shown, on said horizontal arm 12 and along the second direction "Y".

A vertical arm 14 extends along a third direction "Z" which is perpendicular to the first two directions "X", "Y" and is mounted on the trolley 13 by way of mechanisms that are known per se and therefore not described in detail, which enable the translation thereof, actuated by one or more motors, on said trolley 13 and along the third direction "Z". A lower end of the vertical arm 14 bears the grip unit 8. The horizontal guides 11, the horizontal arm 12, the trolley 13 and the vertical arm 14 together with the respective motors, not shown, define raised movement devices for the grip unit 8 which remains hung from said movement devices 11, 12, 13, 14.

The perimeter frame 9 of the manipulation device 7 delimits a manoeuvring space in which the grip unit 8 is moved in three dimensions.

The grip unit 8 comprises coupling devices, not shown, which are adapted to retain and support the forming drum 3 and to make it rotate about its own longitudinal symmetry axis "x-x", which extends parallel to the first direction "X". In particular, the forming drum 3 is borne in a cantilever fashion by the grip unit 8 and is connected to said grip unit 8 at a radially internal connecting portion 15 arranged at an axial end with respect to the drum 3. Such connecting portion 15 is configured to be connected removably with the grip unit 8 by, for example, a clamp.

The line for building carcass structures 2 comprises two delivery stations 4 of semi-finished products which are mutually side-by-side and partially situated in the manoeuvring space.

Each delivery station 4 comprises a support frame 16 resting on the ground. On the support frame 16 and in a raised position with respect to the ground, a lower conveyor 17 is mounted which is defined by a first conveyor belt 18 wound on respective rollers 20 and a subsequent second conveyor belt 19 wound on respective rollers 20. The first conveyor belt 18 has an upper branch which is substantially horizontal and the second conveyor belt 19 has an upper branch which is inclined downward from above starting from the first conveyor belt 18 toward a lower final end 21 of the lower conveyor 17. One or more of the rollers 20 of each conveyor belt 18, 19 is functionally connected to a motor, not shown, which is configured to move the upper branches of the first and of the second conveyor belt 18, 19 along a first feed direction and in a first feed sense "F1" which brings it toward the lower final end 21. Upstream of the first conveyor belt 18, with reference to the first feed sense "F1", a first trolley 22 is arranged which accommodates a reel support 23 which is adapted to support a first semi-finished product 24 wound on a reel. The first semi-finished product 24 unwound from the reel is guided, by way of adapted guides, not shown, up to the upper branch of the first conveyor belt 18. The first trolley 22 comprises therefore a delivery device (the reel) of the first semi-finished product 24 associated with the lower conveyor 17. The upper branches of the first and of the second conveyor belt 18, 19 define a conveyor surface for the respective semi-finished product. Arranged between the first conveyor belt 18 and the second conveyor belt 19 is a first cutting unit 25 the function of which is to cut to size the first semi-finished product 24 advanced on the lower conveyor 17.

Positioned below the second conveyor belt 19 is a first auxiliary conveyor 26, which is also defined by a conveyor belt 27 wound on a pair of rollers 28. An upper branch of the first auxiliary conveyor 26 is inclined and substantially parallel to the upper branch of the second conveyor belt 19. One or more of the rollers 28 of the first auxiliary conveyor 26 are functionally connected to a motor, not shown, which is configured to advance the respective upper branch in a first transport direction "T1" opposite to the first feed sense "F1". A first end 29 of the first auxiliary conveyor 26 is arranged below the final end 21 of the lower conveyor 17 and protrudes beyond said final end 21. A container 31 is positioned below a second end 30 of the first auxiliary conveyor 26, which is opposite the first end 29.

An upper conveyor 32 is mounted on the support frame 16 and in a raised position with respect to the lower conveyor 17. The upper conveyor 32 comprises a respective first conveyor belt 33 wound on respective rollers 34 and a subsequent second conveyor belt 35 wound on respective rollers 34. The first conveyor belt 33 has an upper branch which is substantially horizontal and the second conveyor belt 35 has an upper branch which is inclined downward from above starting from the first conveyor belt 33 toward an upper final end 36 of the upper conveyor 32. One or more of the rollers 34 of each conveyor belt 33, 35 is functionally connected to a motor, not shown, which is configured to move the upper branches of the first and of the second conveyor belt 33, 35 along a second feed direction and in a second feed sense "F2" which brings it toward the upper final end 36. The upper branch of the second conveyor belt 35 belonging to the upper conveyor 32 is substantially parallel to the upper branch of the second conveyor belt 19 belonging to the lower conveyor 17.

The upper final end 36 is vertically offset from the lower final end 21. In particular, the upper final end 36 is retracted, with reference to the first or to the second feed sense "F1", "F2", with respect to the lower final end 21, such that above said lower final end 21 a free space remains which is adapted to allow the approach of the forming drum 3 carried by the grip unit 8.

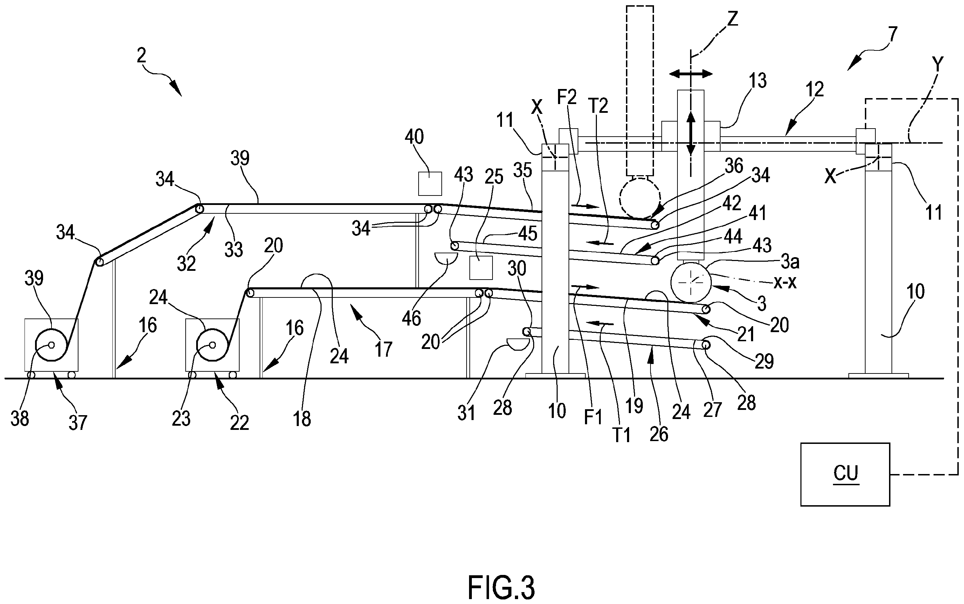

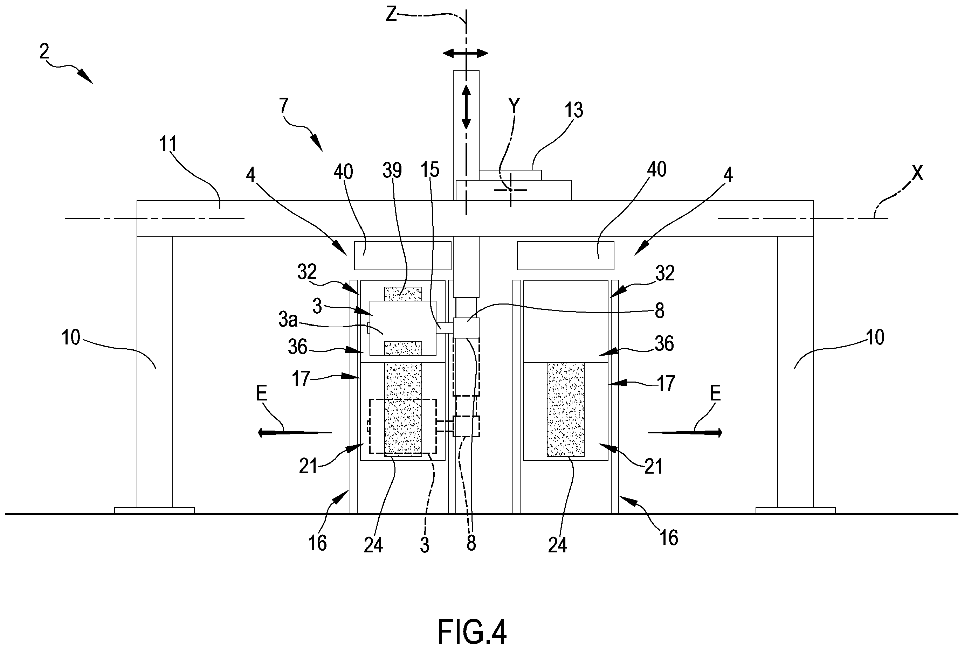

Upstream of the first conveyor belt 33 of the upper conveyor 32, with reference to the second feed sense "F2", a second trolley 37 is arranged which accommodates a reel support 38 which is adapted to support a second semi-finished product 39 wound on a reel. The second semi-finished product 39 unwound from the reel is guided, by way of adapted guides, not shown, up to the upper branch of the first conveyor belt 33 of the upper conveyor 32. The second trolley 37 therefore comprises a delivery device (the reel) of the second semi-finished product 39 associated with the upper conveyor 32. The upper branches of the first and of the second conveyor belt 33, 35 define a conveyor surface for the respective second semi-finished product 39. Arranged between the first conveyor 33 and the second conveyor 35 of the upper conveyor 32 is a second cutting unit 40 the function of which is to cut to size the second semi-finished product 39 advanced on said upper conveyor 32. As can be seen in Figure 3, the upper conveyor 32 extends above the first trolley 22 and the support frame 16 delimits, in such zone, an accommodation for said first trolley 22. The first trolley 22 is transversely extractable, with respect to the feed directions "F1", "F2", from the support frame 16 according to the arrow "E" shown in Figure 4. The second trolley 37 is also removable, i.e. it can be moved away from the support frame 16.

Positioned below the second conveyor belt 35 of the upper conveyor 32 (and above the second conveyor belt 19 of the lower conveyor 17) is a second auxiliary conveyor 41, which is also defined by a conveyor belt 42 wound on a pair of rollers 43. An upper branch of the second auxiliary conveyor 41 is inclined and substantially parallel to the upper branch of the second conveyor belt 35 of the upper conveyor 32. One or more of the rollers 43 of the second auxiliary conveyor 41 are functionally connected to a motor, not shown, which is configured to advance the respective upper branch in a second transport direction "T2" opposite to the second feed sense "F2". A first end 44 of the second auxiliary conveyor 41 is arranged below the upper final end 36 and protrudes beyond said upper final end 36. A container 46 is positioned below a second end 45 of the second auxiliary conveyor 41, which is opposite the first end 44.

As can be better seen in Figure 1, the upper final ends 36 and the lower final ends 21 of both of the delivery stations 4 lie within the manoeuvring space delimited by the perimeter frame 9 and are directed toward the manipulation device 7 while the remaining parts of said delivery stations 4 remain outside the manoeuvring space. Furthermore, in the embodiment shown, the feed directions of both of the delivery stations 4 are parallel to the second direction "Y".

The apparatus 1 further comprises equipment 47 for mounting the annular anchoring structures 102, such equipment 47 being arranged partially in said manoeuvring space and at a side which is opposite with respect to the side where the upper and lower ends 36, 21 of both of the delivery stations 4 are facing (Figure 1).

A control unit "CU" is functionally connected to sensors and motors/actuators of the apparatus 1 in order to manage the operation thereof. In particular, the control unit "CU" is connected to the manipulation device 7, to the grip unit 8, to the motors of the lower conveyor 17 and of the upper conveyor 32, to the first cutting unit 25 and to the second cutting unit 40, to the motors of the first auxiliary conveyor 26 and of the second auxiliary conveyor 41. The control unit "CU" is configured to move the grip unit 8 in the manoeuvring space along the three directions "X", "Y", "Z", to engage the forming drums 3 with the grip unit 8 and disengage them from the grip unit 8, to rotate the forming drum 3 carried by the grip unit 8 about its own axis of symmetry "x-x", to move the conveyor belts 18, 19, 33, 35 along the feed directions in the feed senses "F1", "F2" and, optionally, in mutually opposite directions of retraction, to drive the cutting units 25, 40, and to move the conveyor belts 27, 42 of the auxiliary conveyors 26, 41 respectively. According to the process according to the present invention and in order to form the components of the tyre 100, 100' on the forming drum 3, the manipulation device 7 takes, by the grip unit 8, from an adapted station, a forming drum 3 at a time and moves it in three-dimensional space in order to bring it to at least some of the upper and/or lower final ends 36, 21 of the delivery stations 4. Positioned on each one of said lower final end 21 and of said upper final end 36 is a portion of a semi-finished product 24 and 39 respectively, which were previously unwound from the respective reel support 23, 38, cut to size by the respective cutting unit 25, 40 according to the circumferential extension of a radially outer surface 3a with respect to said forming drum 3 and fed on the conveyor surface up to the respective lower final end 21 and upper final end 36. The control unit "CU" commands the manipulation device 7 so that the latter approaches the forming drum 3 brought by the grip unit 8 to the conveyor surface at the lower final end 21 and the upper final end 36 up until the radially outer surface 3a with respect to the forming drum 3 comes into contact with the respective semi-finished product 24, 39 abutted against the respective lower final end 21, or upper final end 36. By the grip unit 8, the forming drum 3 is made to rotate about its own axis of symmetry "x-x" while the semi-finished product 24, 39 is advanced on the respective second conveyor belt 19, 35 in order to wind it on said radially outer surface 3a.

The forming drum 3 is approached downward from above to the lower final ends 21, which belong to the lower conveyors 17, and to the upper final ends 36, which belong to the upper conveyors 32. Apart from the movement of the second conveyor belt 19, 35, which is necessary in order to follow the winding of the semi-finished product onto the forming drum 3, the lower final end 21 and the upper final end 36 respectively of the lower conveyor 17 and of the upper conveyor 32 are fixed and it is the forming drum 3 which is moved between them by means of the manipulation device 7. In particular, the grip unit 8 and, with it, the forming drum 3 can translate along a first horizontal axis "X" which corresponds to the first direction "X" identified by the horizontal guides 11, along a second horizontal axis "Y" which corresponds to the second direction "Y" identified by the horizontal arm 12 and along a vertical axis "Z" which corresponds to the third direction "Z" identified by the vertical arm 14.

By way of example and with reference to Figure 4, the forming drum 3 is first approached to the lower final end 21 of the left-hand delivery station 4 (shown in dotted lines), where it receives a first semi-finished product 24 (which defines for example the liner 112, 112'), then it is brought upward and approached to the upper final end 36 of the same left-hand delivery station 4 (shown in continuous lines), where it receives a second semi-finished product 39 (for example a carcass ply 101, 101'), then it is brought to the right and downward and approached to the lower final end 21 of the right-hand delivery station 4, where it receives a third semi-finished product (for example a second carcass ply 101, 101'). The upper conveyor 32 of the right-hand delivery station 4 in this example remains unused. According to a preferred embodiment of the process and thanks to the movements explained above, the forming drum 3 is approached to and/or moved away from the lower final end 21 and the upper final end 36, along a direction perpendicular to the conveyor surfaces, by combining the translation along the vertical axis "Z" with the translation along the second horizontal axis "Y".

Furthermore, in a preferred embodiment of the process and thanks to the movements explained above, the above mentioned radially outer surface 3a with respect to the forming drum 3 is approached to a head of the semi-finished product 24, 39 which lies on the respective lower final end 21 or upper final end 36 in a predefined zone of said lower final end 21 or upper final end 36, which always remains the same whatever the diameter of the forming drum 3. The head of the semi-finished product 24, 39 is therefore preferably always stopped at the same point in order to be coupled to the forming drum 3.

After having finished the winding of the semi-finished products 24, 39 at the delivery stations 4 and the formation of a carcass sleeve, the forming drum 3 is brought by the grip unit 8 to the equipment 47 for mounting the annular anchoring structures 102, 102' where the locating occurs of said annular anchoring structures 102, 102' on axially mutually opposite flaps of the sleeve and also the turning-up of the end flaps of the carcass plies 101, 101'.

The forming drum 3 bearing the complete carcass sleeve is then brought to the assembly station 6.

If, during a production cycle or between one cycle and the next it is necessary to discard a semi-finished product 24, 39 (for example because it is defective) which lies respectively on the lower conveyor 17 or on the upper conveyor 32, the second conveyor belt 19, 35 is made to advance while the forming drum 3 is kept distanced from the lower final end 21, or from the upper final end 36, so as to make the defective semi-finished product 24, 39 fall onto the first auxiliary conveyor 26, or onto the second auxiliary conveyor 41 respectively, which in turn brings it and makes it fall inside the respective container 31, 46.

## Claims

1. A process for building tyres for vehicle wheels, which comprises: forming components of a tyre (100, 100') on a forming drum (3), wherein said components are formed by:
- picking up a forming drum (3) by way of a grip unit (8);
- moving the grip unit (8) in space in three dimensions (X, Y, Z) in order to bring it to final ends (21, 36) of at least two conveyors (17, 32) which belong to at least two delivery stations (4) for delivering semi-finished products (24, 39), wherein at least two of said final ends (21, 36) are superimposed on each other;
- feeding said semi-finished products (24, 39) onto respective upper conveyor surfaces of said conveyors (17, 32) up to said final ends (21, 36);
- approaching the forming drum (3) being carried by the grip unit (8) to at least some of the conveyor surfaces until a radially outer surface (3a) with respect to the forming drum (3) is placed in contact with the semi-finished product (24, 39) which is abutted against the respective final end (21, 36);
- rotating the forming drum (3) about a symmetry axis (x-x) thereof in order to wind the semi-finished product (24, 39) on said radially outer surface (3a).

2. The process according to the preceding claim, wherein the grip unit (8) is moved by way of movement devices (11, 12, 13, 14) which are raised with respect to said at least two delivery stations (4), wherein the grip unit (8) is hung from said movement devices (11, 12, 13, 14).

3. The process according to the preceding claim, wherein the grip unit (8) is moved in a manoeuvring space delimited by a perimeter frame (9) which supports said movement devices (11, 12, 13, 14).

4. The process according to one of the preceding claims, wherein the forming drum (3) is moved by translating it along a first horizontal axis (X) and/or a second horizontal axis (Y) orthogonal to the first horizontal axis (X) and/or a vertical axis (Z).

5. The process according to one of the preceding claims, wherein the forming drum (3) is approached to a lower final end (21) which projects towards a manipulation device (7) more than an upper final end (36) does.

6. The process according to one of the preceding claims, wherein the forming drum (3) is approached to the conveyor surfaces, downward from above.

7. The process according to one of the preceding claims, wherein the radially outer surface (3a) with respect to the forming drum (3) is placed in contact with the semi-finished product (24, 39) which is abutted against the respective final end (21, 36) at a zone of said final end (21, 36) that does not change with the variation of the diameter of the forming drum (3).

8. The process according to one of the preceding claims, comprising collecting and moving away any scrap material by way of an auxiliary conveyor (26, 41) which is placed beneath the respective conveyor surface of each conveyor (17, 32), wherein collecting and moving away comprises moving the auxiliary conveyor (26, 41) in a transport direction (T1, T2) which is opposite to the feed sense (F1, F2) of the respective conveyor (17, 32).

9. The process according to one of the preceding claims, comprising: moving the grip unit (8) in a manoeuvring space in order to bring the forming drum (3) to equipment (47) for locating annular anchoring structures (102, 102').

10. An apparatus for building tyres for vehicle wheels, which comprises:
- at least one forming drum (3);
- a manipulation device (7) having at least one grip unit (8) which is configured to support said forming drum (3) and to make it rotate about a longitudinal symmetry axis (x-x) thereof;
- at least two delivery stations (4) for delivering semi-finished products (24, 39) each comprising at least two conveyors (17, 32) which have conveyor surfaces for the respective semi-finished products (24, 39) which can move along respective feed directions, wherein final ends (21, 36) of said conveyors (17, 32) are directed towards the manipulation device (7);
- a control unit (CU) which is operatively connected at least to said manipulation device (7) and is configured to:
• bring the grip unit (8) above each one of said final ends (21, 36) and abut the forming drum (3) against the respective semi-finished product (24, 39) supported by the respective conveyor surface;
• rotate the forming drum (3) in order to wind said semi-finished product (24, 39) on a radially outer surface (3a) with respect to said forming drum (3);
- wherein the manipulation device (7) is configured to move the grip unit (8) in space in three dimensions (X, Y, Z);
- wherein said at least two conveyors (17, 32) are superimposed on each other and the respective final ends (21, 36) are situated at different heights.

11. The apparatus according to claim 10, wherein the final ends (21, 36) of the superimposed conveyors (17, 32) of a same delivery station (4) are vertically offset.

12. The apparatus according to one of the preceding claims 10 or 11, wherein each delivery station (4) comprises a device for delivering at least one semi-finished product (24, 39) for each conveyor (17, 32) and wherein at least one of the delivery devices is removably housed in the support frame (16).

13. The apparatus according to one of the preceding claims 10 to 12, wherein each conveyor (17, 32) is combined with an auxiliary conveyor (26, 41) which is placed beneath the respective conveyor surface and is configured to collect and move away any scrap material.

14. The apparatus according to one of the preceding claims 10 to 13, wherein the grip unit (8) is translatable along a first horizontal axis (X), a second horizontal axis (Y) orthogonal to the first (X), and a vertical axis (Z).

15. The apparatus according to one of the preceding claims 10 to 14, wherein the manipulation device (7) comprises movement devices (11, 12, 13, 14) which are raised with respect to said at least two delivery stations (4) and which carry the grip unit (8), and the grip unit (8) is hung from said movement devices (11, 12, 13, 14).

## Patentansprüche

1. Verfahren zur Herstellung von Reifen für Fahrzeugräder, das Folgendes umfasst: Formen von Komponenten eines Reifens (100, 100') auf einer Formtrommel (3), wobei die Komponenten geformt werden durch
- Aufnehmen einer Formtrommel (3) mittels einer Greifeinheit (8);
- Bewegen der Greifeinheit (8) im Raum in drei Dimensionen (X, Y, Z), um sie zu definitiven Enden (21, 36) mindestens zweier Förderer (17, 32) zu bringen, die zu mindestens zwei Abgabestationen (4) zur Abgabe von Halbfabrikaten (24, 39) gehören, wobei mindestens zwei der definitiven Enden (21, 36) übereinander angeordnet sind;
- Zuführen der Halbfabrikate (24, 39) auf jeweilige obere Fördereroberflächen der Förderer (17, 32) bis zu den definitiven Enden (21, 36);
- Nähern der Formtrommel (3), die von der Greifeinheit (8) zu mindestens einigen der Fördereroberflächen getragen wird, bis eine radial äußere Oberfläche (3a) in Bezug auf die Formtrommel (3) in Kontakt mit dem Halbfabrikat (24, 39) platziert ist, das an das jeweilige definitive Ende (21, 36) stößt;
- Drehen der Formtrommel (3) um eine Symmetrieachse (x-x) davon, um das Halbfabrikat (24, 39) auf der radial äußeren Oberfläche (3a) aufzuwickeln.

2. Verfahren nach dem vorhergehenden Anspruch, wobei die Greifeinheit (8) mittels Bewegungseinrichtungen (11, 12, 13, 14) bewegt wird, die in Bezug auf die mindestens zwei Abgabestationen (4) hochgehoben werden, wobei die Greifeinheit (8) an den Bewegungseinrichtungen (11, 12, 13, 14) hängt.

3. Verfahren nach dem vorhergehenden Anspruch, wobei die Greifeinheit (8) in einem Manövrierraum bewegt wird, der durch einen Umfassungsrahmen (9) begrenzt ist, der die Bewegungseinrichtungen (11, 12, 13, 14) trägt.

4. Verfahren nach einem der vorhergehenden Ansprüche, wobei die Formtrommel (3) bewegt wird, indem sie entlang einer ersten horizontalen Achse (X) und/oder einer zweiten horizontalen Achse (Y), orthogonal zur ersten horizontalen Achse (X), und/oder einer vertikalen Achse (Z) verschoben wird.

5. Verfahren nach einem der vorhergehenden Ansprüche, wobei die Formtrommel (3) einem unteren definitiven Ende (21) genähert wird, das mehr als ein oberes definitives Ende (36) zu einer Manipulationseinrichtung (7) hin vorsteht.

6. Verfahren nach einem der vorhergehenden Ansprüche, wobei die Formtrommel (3) den Fördereroberflächen von oben nach unten genähert wird.

7. Verfahren nach einem der vorhergehenden Ansprüche, wobei die radial äußere Oberfläche (3a) in Bezug auf die Formtrommel (3) in Kontakt mit dem Halbfabrikat (24, 39) gebracht wird, das an einer Zone des definitiven Endes (21, 36), die sich mit der Veränderung des Durchmessers der Formtrommel (3) nicht ändert, an das jeweilige definitive Ende (21, 36) stößt.

8. Verfahren nach einem der vorhergehenden Ansprüche, das ein Einsammeln und Wegbewegen jeglichen Abfallmaterials mittels eines Hilfsförderers (26, 41), der unterhalb der jeweiligen Förderoberfläche jedes Förderers (17, 32) platziert ist, umfasst, wobei das Einsammeln und Wegbewegen umfasst, den Hilfsförderer (26, 41) in einer Transportrichtung (T1, T2) zu bewegen, die entgegengesetzt zur Vorschubrichtung (F1, F2) des jeweiligen Förderers (17, 32) ist.

9. Verfahren nach einem der vorhergehenden Ansprüche, umfassend: Bewegen der Greifeinheit (8) in einem Manövrierraum, um die Formtrommel (3) zu einer Ausrüstung (47) zum Platzieren ringförmiger Verankerungsstrukturen (102, 102') zu bringen.

10. Vorrichtung zur Herstellung von Reifen für Fahrzeugräder, die Folgendes umfasst:
- mindestens eine Formtrommel (3);
- eine Manipulationseinrichtung (7) mit mindestens einer Greifeinheit (8), die dafür ausgelegt ist, die Formtrommel (3) zu tragen und um eine Längssymmetrieachse (x-x) davon zu drehen;
- mindestens zwei Abgabestationen (4) zum Abgeben von Halbfabrikaten (24, 39), die jeweils mindestens zwei Förderer (17, 32) umfassen, die Fördereroberflächen für die jeweiligen Halbfabrikate (24, 39) aufweisen, die sich in jeweiligen Vorschubrichtungen bewegen können, wobei definitive Enden (21, 36) der Förderer (17, 32) auf die Manipulationseinrichtung (7) gerichtet sind;
- eine Steuereinheit (CU: Control Unit (engl.)), die mindestens mit der Manipulationseinrichtung (7) wirkverbunden ist und so konfiguriert ist, dass
• die Greifeinheit (8) über jedes der definitiven Enden (21, 36) gebracht wird und die Formtrommel (3) an dem jeweiligen Halbfabrikat (24, 39), das von der jeweiligen Fördereroberfläche getragen wird, in Anlage gebracht wird;
• die Formtrommel (3) gedreht wird, um das Halbfabrikat (24, 39) auf eine radial äußere Oberfläche (3a) in Bezug auf die Formtrommel (3) zu wickeln;
- wobei die Manipulationseinrichtung (7) dafür ausgelegt ist, die Greifeinheit (8) im Raum in drei Dimensionen (X, Y, Z) zu bewegen;
- wobei die mindestens zwei Förderer (17, 32) übereinander angeordnet sind und die jeweiligen definitiven Enden (21, 36) sich auf verschiedenen Höhen befinden.

11. Vorrichtung nach Anspruch 10, wobei die definitiven Enden (21, 36) der übereinander angeordneten Förderer (17, 32) einer selben Abgabestation (4) höhenversetzt sind.

12. Vorrichtung nach einem der vorhergehenden Ansprüche 10 oder 11, wobei jede Abgabestation (4) eine Einrichtung zum Abgeben mindestens eines Halbfabrikats (24, 39) für jeden Förderer (17, 32) umfasst und wobei mindestens eine der Abgabeeinrichtungen entfernbar in dem Tragrahmen (16) untergebracht ist.

13. Vorrichtung nach einem der vorhergehenden Ansprüche 10 bis 12, wobei jeder Förderer (17, 32) mit einem Hilfsförderer (26, 41) kombiniert ist, der unterhalb der jeweiligen Fördereroberfläche platziert ist und dafür ausgelegt ist, jegliches Abfallmaterial einzusammeln und wegzubewegen.

14. Vorrichtung nach einem der vorhergehenden Ansprüche 10 bis 13, wobei die Greifeinheit (8) entlang einer ersten horizontalen Achse (X), einer zweiten horizontalen Achse (Y), orthogonal zur ersten Achse (X,) und einer vertikalen Achse (Z) verschiebbar ist.

15. Vorrichtung nach einem der vorhergehenden Ansprüche 10 bis 14, wobei die Manipulationseinrichtung (7) Bewegungseinrichtungen (11, 12, 13, 14) umfasst, die in Bezug auf die mindestens zwei Abgabestationen (4) hochgehoben sind und die die Greifeinheit (8) tragen, und die Greifeinheit (8) an den Bewegungseinrichtungen (11, 12, 13, 14) hängt.

## Revendications

1. Procédé de construction de pneus pour roues de véhicule, qui comprend : la formation de composants d'un pneu (100, 100') sur un tambour de formation (3), dans lequel lesdits composants sont formés en :
- saisissant un tambour de formation (3) au moyen d'une unité de préhension (8) ;
- déplaçant l'unité de préhension (8) dans l'espace en trois dimensions (X, Y, Z) afin de l'amener aux extrémités finales (21, 36) d'au moins deux transporteurs (17, 32) qui appartiennent à au moins deux postes de distribution (4) pour distribuer des produits semi-finis (24, 39), où au moins deux desdites extrémités finales (21, 36) sont superposées l'une sur l'autre ;
- acheminant lesdits produits semi-finis (24, 39) sur des surfaces de transporteur supérieur respectif desdits transporteurs (17, 32) jusqu'auxdites extrémités finales (21, 36) ;
- amenant le tambour de formation (3) qui est porté par l'unité de préhension (8) à s'approcher d'au moins certaines des surfaces de transporteur jusqu'à ce qu'une surface radialement extérieure (3a) par rapport au tambour de formation (3) soit mise en contact avec le produit semi-fini (24, 39) qui est en butée contre l'extrémité finale respective (21, 36) ;
- faisant tourner le tambour de formation (3) autour d'un axe de symétrie (x-x) de celui-ci afin d'enrouler le produit semi-fini (24, 39) sur ladite surface radialement extérieure (3a).

2. Procédé selon la revendication précédente, dans lequel l'unité de préhension (8) est déplacée au moyen de dispositifs de déplacement (11, 12, 13, 14) qui sont relevés par rapport auxdits au moins deux postes de distribution (4), où l'unité de préhension (8) est suspendue auxdits dispositifs de déplacement (11, 12, 13, 14) .

3. Procédé selon la revendication précédente, dans lequel l'unité de préhension (8) est déplacée dans un espace de manœuvre délimité par un cadre périmétrique (9) qui supporte lesdits dispositifs de déplacement (11, 12, 13, 14).

4. Procédé selon l'une des revendications précédentes, dans lequel le tambour de formation (3) est déplacé en l'amenant en translation le long d'un premier axe horizontal (X) et/ou d'un deuxième axe horizontal (Y) orthogonal au premier axe horizontal (X) et/ou d'un axe vertical (Z).

5. Procédé selon l'une des revendications précédentes, dans lequel le tambour de formation (3) est approché d'une extrémité finale inférieure (21) qui fait saillie vers un dispositif de manipulation (7) davantage qu'une extrémité finale supérieure (36).

6. Procédé selon l'une des revendications précédentes, dans lequel le tambour de formation (3) est approché des surfaces de transporteur, de haut en bas.

7. Procédé selon l'une des revendications précédentes, dans lequel la surface radialement extérieure (3a) par rapport au tambour de formation (3) est mise en contact avec le produit semi-fini (24, 39) qui est en butée contre l'extrémité finale respective (21, 36) au niveau d'une zone de ladite extrémité finale (21, 36) qui ne change pas avec la variation du diamètre du tambour de formation (3).

8. Procédé selon l'une des revendications précédentes, comprenant la collecte et l'écartement de tout rebut au moyen d'un transporteur auxiliaire (26, 41) qui est placé sous la surface de transporteur respectif de chaque transporteur (17, 32), où l'étape de collecte et d'écartement comprend le déplacement du transporteur auxiliaire (26, 41) dans une direction de transport (T1, T2) qui est opposée au sens d'acheminement (F1, F2) du transporteur respectif (17, 32).

9. Procédé selon l'une des revendications précédentes, comprenant : le déplacement de l'unité de préhension (8) dans un espace de manœuvre afin d'amener le tambour de formation (3) vers un équipement (47) de localisation de structures d'ancrage annulaires (102, 102').

10. Appareil de construction de pneus pour roues de véhicule, qui comprend :
- au moins un tambour de formation (3) ;
- un dispositif de manipulation (7) ayant au moins une unité de préhension (8) qui est configurée pour supporter ledit tambour de formation (3) et pour le faire tourner autour d'un axe de symétrie longitudinal (x-x) de celui-ci ;
- au moins deux postes de distribution (4) pour distribuer des produits semi-finis (24, 39) comprenant chacun au moins deux transporteurs (17, 32) qui ont des surfaces de transporteur pour les produits semi-finis respectifs (24, 39) qui peuvent se déplacer le long de directions d'acheminement respectives, où des extrémités finales (21, 36) desdits transporteurs (17, 32) sont dirigées vers le dispositif de manipulation (7) ;
- une unité de commande (CU) qui est reliée de manière fonctionnelle au moins audit dispositif de manipulation (7) et est configurée pour :
• amener l'unité de préhension (8) au-dessus de chacune desdites extrémités finales (21, 36) et amener le tambour de formation (3) en butée contre le produit semi-fini respectif (24, 39) supporté par la surface de transporteur respectif ;
• faire tourner le tambour de formation (3) afin d'enrouler ledit produit semi-fini (24, 39) sur une surface radialement extérieure (3a) par rapport audit tambour de formation (3) ;
- dans lequel le dispositif de manipulation (7) est configuré pour déplacer l'unité de préhension (8) dans l'espace en trois dimensions (X, Y, Z) ;
- dans lequel lesdits au moins deux transporteurs (17, 32) sont superposés l'un sur l'autre et les extrémités finales respectives (21, 36) sont situées à des hauteurs différentes.

11. Appareil selon la revendication 10, dans lequel les extrémités finales (21, 36) des transporteurs superposés (17, 32) d'un même poste de distribution (4) sont décalées verticalement.

12. Appareil selon l'une des revendications précédentes 10 ou 11, dans lequel chaque poste de distribution (4) comprend un dispositif pour distribuer au moins un produit semi-fini (24, 39) pour chaque transporteur (17, 32) et dans lequel au moins l'un des dispositifs de distribution est reçu de manière amovible dans le cadre de support (16).

13. Appareil selon l'une des revendications précédentes 10 à 12, dans lequel chaque transporteur (17, 32) est combiné avec un transporteur auxiliaire (26, 41) qui est placé sous la surface de transporteur respectif et est configuré pour collecter et écarter tout rebut.

14. Appareil selon l'une des revendications précédentes 10 à 13, dans lequel l'unité de préhension (8) peut effectuer une translation le long d'un premier axe horizontal (X), d'un deuxième axe horizontal (Y) orthogonal au premier axe (X), et d'un axe vertical (Z).

15. Appareil selon l'une des revendications précédentes 10 à 14, dans lequel le dispositif de manipulation (7) comprend des dispositifs de déplacement (11, 12, 13, 14) qui sont relevés par rapport auxdits au moins deux postes de distribution (4) et qui portent l'unité de préhension (8), et l'unité de préhension (8) est suspendue auxdits dispositifs de déplacement (11, 12, 13, 14) .
